# EUROPÄISCHE PATENTSCHRIFT

(11) **EP 1 921 962 B1**
(45) Veröffentlichungstag und Bekanntmachung des Hinweises auf die Patenterteilung: **29.07.2009**
(21) Anmeldenummer: 06792841.6
(22) Anmeldetag: 16.08.2006
(51) Int. Cl.: A47J 43/08

(54) **KÜCHENGERÄT MIT EINER VERSTÄRKTEN ELEKTROMOTOR-GETRIEBESTUFEN-ANORDNUNG UND VERFAHREN ZUM HERSTELLEN EINES ELEKTROMOTORISCHEN KÜCHENGERÄTES**
KITCHEN APPLIANCE PROVIDED WITH A REINFORCED ELECTRIC MOTOR-GEAR STAGE ARRANGEMENT AND METHOD FOR PRODUCING AN ELECTRIC MOTOR-DRIVEN KITCHEN APPLIANCE
APPAREIL DE CUISINE COMPORTANT UN ENSEMBLE MOTEUR ELECTRIQUE-ETAGE D'ENGRENAGE RENFORCE, ET PROCEDE DE PRODUCTION D'UN APPAREIL DE CUISINE A MOTEUR ELECTRIQUE

(30) Priorität: 26.08.2005 DE 102005040544
(43) Veröffentlichungstag der Anmeldung: 21.05.2008
(73) Patentinhaber: BSH Bosch und Siemens Hausgeräte GmbH, 81739 München (DE)
(72) Erfinder: KOVACIC, Peter, 3303 Gomilsko (SI); PESEC, Jurij, 3301 Petrovce (SI)
(86) Internationale Anmeldenummer: PCT/EP2006/065360
(87) Internationale Veröffentlichungsnummer: WO 2007/023123

(56) Entgegenhaltungen:
- DE-A1- 2 149 905
- DE-A1- 3 932 760
- US-A- 2 075 840

## Beschreibung

Die Erfindung betrifft ein elektromotorisches Küchengerät, insbesondere eine elektromotorische Solo- oder Universalküchenmaschine, umfassend eine einsetzbare Elektromotor-Getriebestufen-Anordnung, die einen ein Motorgehäuse aufweisenden Elektromotor und eine daran befestigte, ein Getriebegehäuse aufweisende Getriebestufe aufweist; sowie ein Verfahren zum Herstellen eines elektromotorischen Küchengeräts.

Aus der DE 25 51 842 ist ein Vielzweckküchengerät bekannt, welches eine Vielzahl von Aufnahmen für Werkzeuge wie z.B. Knethaken, Fleischwolf oder dergleichen aufweist, die mit unterschiedlichen Drehzahlen angetrieben werden. Hierfür ist mindestens eine Getriebestufe erforderlich, mit der die vom Elektromotor bereitgestellte Drehzahl an die jeweilig erforderliche Drehzahl des Werkzeugs angepasst werden kann.

DE 39 32 760 A1 offenbart einen Rahmen für Elektromotoren zum Antrieb von Haushaltsgeräten wie Rührgeräte, Elektromesser und dergleichen und weist zwei Seitenträger auf, die stirnseitig durch Brücken miteinander verbunden sind. Diese Brücken dienen der Lagerung der Motorwelle, wobei eine der beiden Brücken auch die Antriebsmittel lagert. Der Motorrahmen ist hierbei aus zwei miteinander verbundenen Halbschalen gebildet, die in ihrem mittleren Bereich eine Aussparung zum Durchtritt eines Stators, eines Rotors mit Kollektor und eines Lüfterrades sowie Lagerstellen für Motorwelle und Abtriebsmittel aufweisen.

Es ist Aufgabe der vorliegenden Erfindung, ein elektromotorisches Küchengerät bzw. ein Verfahren zum Herstellen eines Küchengeräts bereitzustellen, womit die Montage vereinfacht und die Herstellung preisgünstiger gestaltet werden kann.

Diese Aufgabe wird erfindungsgemäß gelöst durch das elektromotorische Küchengerät sowie durch das Verfahren zum Herstellen eines Küchengeräts wie in den unabhängigen Ansprüchen angegeben. Weitere vorteilhafte Ausgestaltungen und Weiterbildungen, die jeweils einzeln angewandt oder beliebig miteinander kombiniert werden können, sind Gegenstand der jeweilig abhängigen Ansprüche.

Das erfindungsgemäße elektromotorische Küchengerät, insbesondere die elektromotorische Solo- oder Universalküchenmaschine, umfassend eine einsetzbare Elektromotor-Getriebestufen-Anordnung, die einen ein Motorgehäuse aufweisenden Elektromotor und eine damit befestigte, ein Getriebegehäuse aufweisende Getriebestufe aufweist, sieht vor, dass die Anordnung einen insbesondere aufsetzbaren Verstärkungsrahmen aufweist, der um das Motorgehäuse und das Getriebegehäuse herum verläuft.

Der Elektromotor wird mit der Getriebestufe zu einer Elektromotor-Getriebestufen-Anordnung vormontiert. Die Elektromotor-Getriebestufen-Anordnung kann somit separat von dem elektromotorischen Küchengerät, insbesondere separat von dem Gerätegehäuse des elektromotorischen Küchengeräts, getestet und spezifiziert werden. Gegebenenfalls kann somit im Vorfeld schon erkannt werden, ob der Elektromotor bzw. die Getriebestufe bzw. die Anordnung von dem Elektromotor und der Getriebestufe Mängel aufweist. Beispielsweise kann an der Elektromotor-Getriebestufen-Anordnung mit Hilfe einer Geräuschmessung festgestellt werden, ob die Elektromotor-Getriebestufen-Anordnung, d.h. die zentrale Funktionskomponente des elektromotorischen Küchengeräts, fehlerfrei funktioniert. Mit Hilfe des aufsetzbaren Verstärkungsrahmens wird die Elektromotor-Getriebestufen-Anordnung verstärkt. Hierbei ist insbesondere eine Verstärkung gegen Torsion entlang einer Motorachse besonders vorteilhaft. Sowohl das Motorgehäuse als auch das Getriebegehäuse kann somit einfacher ausgestaltet werden.

Beispielsweise wird das Motorgehäuse bzw. das Getriebegehäuse aus einem faserverstärkten Kunststoff hergestellt. Der aufsetzbare Verstärkungsrahmen besteht vorteilhafterweise aus Metall.

Der Verstärkungsrahmen stellt insbesondere eine im wesentlichen torsionssteife Verbindung entlang der Verbindungslinie zwischen dem Elektromotor und der Getriebestufe her, wobei die torsionssteife Verbindung insbesondere Drehmomente in einem Bereich von 3 Newtonmeter bis 100 Newtonmeter, vorzugsweise in einem Bereich von 5 Newtonmeter bis 50 Newtonmeter, besonders bevorzugt in einem Bereich von 10 Newtonmeter bis 20 Newtonmeter, aufnehmen kann.

Der Verstärkungsrahmen kann insbesondere aus einem Metall, insbesondere durch Stanzen oder Pressen oder durch Spritzguss hergestellt, sein. Mit derartigen Fertigungsverfahren können besonders torsionssteife Strukturen gefertigt werden.

Der Verstärkungsrahmen ist insbesondere mit Hilfe von weniger als zehn Schrauben, insbesondere mit weniger als sechs Schrauben, vorzugsweise mit nur einer Schraube, an dem Getriebegehäuse und/oder an dem Motorgehäuse verschraubt.

Das Getriebegehäuse und das Motorgehäuse bzw. der Verstärkungsrahmen können Verbindungselemente, insbesondere Verbindungsvorsprünge, vorzugsweise eine umlaufende Feder, und Verbindungsgegenelemente, insbesondere Verbindungsaufnahmen, vorzugsweise eine umlaufende Nut, aufweisen, mit denen eine gewindefreie Befestigung des Verstärkungsrahmens an dem Getriebegehäuse bzw. an dem Motorgehäuse bewirkt wird. Gewindefreie Befestigungen des Verstärkungsrahmens haben den Vorteil, dass der Verstärkungsrahmen im Wesentlichen nur über die Elektromotor-Getriebestufen-Anordnung übergestreift werden muss, wodurch der Montageaufwand erheblich vereinfacht wird.

Der Verstärkungsrahmen weist vorteilhafterweise ein U-förmiges oder L-förmiges Profil auf, Durch eine derartige Profilierung kann der Verstärkungsrahmen vergleichsweise leicht ausgestaltet werden, während er große Drehmomente aufnehmen kann. Eine besonders leichte Ausgestaltung der Elektromotor-Getriebestufen-Anordnung ist in der Praxis vorteilhaft, um die Handhabung des Küchengeräts zu vereinfachen.

In einer besonderen Ausgestaltung kann ein Werkzeug, insbesondere ein Pürier-, Misch-, Häcksel-, Knet- und/oder Schneidwerk ein Schlag- bzw. Rührbesen, ein Getränkemixer, ein Durchlaufschnitzler, eine Getreidemühle, eine Zitrus- bzw. Fruchtpresse und/oder ein Fleischwolf mit dem Küchengerät verbunden werden. Hierfür weist das Küchengerät insbesondere mehrere Werkzeugaufnahmen auf, die je nach Werkzeug mit einer unterschiedlichen Umdrehungsfrequenz betrieben werden können. Das Küchengerät kann aufgrund der vielfältigen Werkzeuge vielseitig eingesetzt werden.

Das Motorgehäuse und/oder das Getriebegehäuse sind insbesondere aus Kunststoff, insbesondere aus Glasfaser oder Carbonfaser verstärktem Kunststoff, hergestellt. Mit Hilfe des Verstärkungsrahmens kann sowohl das Motorgehäuse als auch das Getriebegehäuse einfacher und preisgünstiger hergestellt werden, da die mechanische Stabilität nicht durch das Motorgehäuse bzw. das Getriebegehäuse als solches bereitgestellt, sondern erst in Verbindung mit dem Verstärkungsrahmen erreicht werden muss.

Das Getriebegehäuse und das Motorgehäuse sind insbesondere mit Hilfe eines Schraubflansches, insbesondere mit Hilfe eines Bajonettverschlusses, miteinander verbunden. Ein Bajonettverschluss vereinfacht die Montage des Elektromotors mit der Getriebestufe erheblich und erlaubt eine preisgünstigere Herstellung des Küchengeräts.

Das erfindungsgemäße Verfahren zum Herstellen eines Küchengeräts, insbesondere des erfindungsgemäßen Küchengeräts, welches ein Gerätegehäuse, einen ein Motorgehäuse aufweisenden Elektromotor und eine ein Getriebegehäuse aufweisende Getriebestufe aufweist, wobei das Motorgehäuse mit dem Getriebegehäuse zur Vormontage unter Ausbildung einer Elektromotor-Getriebestufen-Anordnung derart verbunden wird, dass eine Motorwelle des Elektromotors mit einer Getriebewelle der Getriebestufe drehfest verkoppelt wird, und um das Getriebegehäuse und das Motorgehäuse ein Verstärkungsrahmen herumgelegt wird, so dass das Getriebegehäuse torsionssteif mit dem Motorgehäuse verbunden ist; und wobei anschließend die vormontierte Elektromotor-Getriebestufen-Anordnung in das Gerätegehäuse eingebaut wird.

Durch die Verwendung eines Verstärkungsrahmens wird die Elektromotor-Getriebestufen-Anordnung erheblich verstärkt und stabilisiert. Die Elektromotor-Getriebestufen-Anordnung kann vormontiert werden und außerhalb des Gerätegehäuses des Küchengeräts getestet bzw. spezifiziert werden. Hierdurch werden eine Montage und eine Herstellung des Küchengeräts erheblich vereinfacht.

Der Verstärkungsrahmen wird insbesondere mit weniger als zehn Schrauben, insbesondere weniger als sechs Schrauben, vorzugsweise mit nur einer Schraube, an dem Motorgehäuse und/oder Getriebegehäuse befestigt. Der Verstärkungsrahmen kann auch mit dem Motorgehäuse und/oder mit dem Getriebegehäuse verklipst werden. Mit Hilfe von Clips kann eine stabile Befestigung der jeweiligen Komponenten auf einfache Weise sehr schnell bewerkstelligt werden. Die Elektromotor-Getriebestufen-Anordnung wird vorteilhafterweise vor dem Einbau in das Gerätegehäuse getestet bzw. spezifiziert.

Weitere vorteilhafte Einzelheiten und Ausgestaltungen, die jeweils einzeln angewandt oder beliebig miteinander kombiniert werden können, werden anhand der folgenden Zeichnung, welche die Erfindung nicht einschränken, sondern lediglich exemplarisch illustrieren soll, näher erläutert.

### Es zeigen schematisch:

Fig. 1 ein erfindungsgemäßes Küchengerät in einer perspektivischen Schrägansicht seitlich von oben;
Fig. 2 eine Elektromotor-Getriebestufen-Anordnung des erfindungsgemäßen Küchengeräts in einer perspektivischen Schrägansicht beim Verbinden des Elektromotors mit einer Getriebestufe;
Fig. 3 die Elektromotor-Getriebestufen-Anordnung nach Fig. 2 nach vollendeter Vormontage;
Fig. 4 die Elektromotor-Getriebestufen-Anordnung nach den Figuren 2 und 3 vor einem Zusammenbau des Elektromotors mit der Getriebestufe;
Fig. 5 eine weitere Elektromotor-Getriebestufen-Anordnung für ein erfindungsgemäßes Küchengerät vor der Vormontage des Elektromotors mit der Getriebestufe;
Fig. 6 eine Elektromotor-Getriebestufen-Anordnung nach Figuren 2 bis 5 mit Verstärkungsrahmen;
Fig. 7 den Verstärkungsrahmen nach Fig. 6;
Fig. 8 einen Längsschnitt durch die Elektromotor-Getriebestufen-Anordnung nach einer der Figuren 2 bis 6 mit einer vertikalen Schnittebene;
Fig. 9 einen Längsschnitt der Elektromotor-Getriebestufen-Anordnung nach einer der Figuren 2 bis 6 oder 8 in einem Längsschnitt mit einer waagerechten Schnittebene;
Fig. 10 eine weitere Ausführungsform einer Elektromotor-Getriebestufen-Anordnung des erfindungsgemäßen Küchengeräts im Längsschnitt mit einer vertikalen Schnittebene;
Fig. 11 einen senkrecht zur Motorendrehachse verlaufender Querschnitt durch eine Getriebestufe eines erfindungsgemäßen Küchengeräts;
Fig. 12 eine schematische Draufsicht einer Getriebestufenanordnung eines erfindungsgemäßen Küchengeräts;
Fig. 13 einen Längsschnitt durch eine Elektromotor-Getriebestufen-Anordnung eines erfindungsgemäßen Küchengeräts mit einer vertikalen Schnittebene.

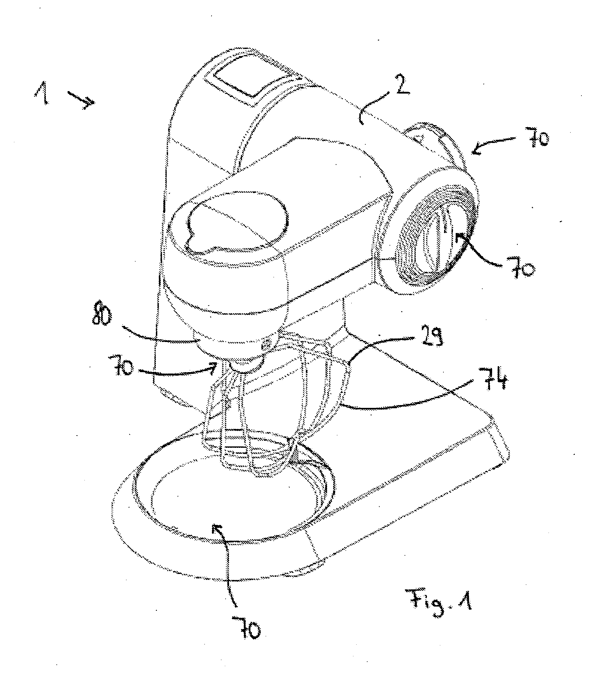

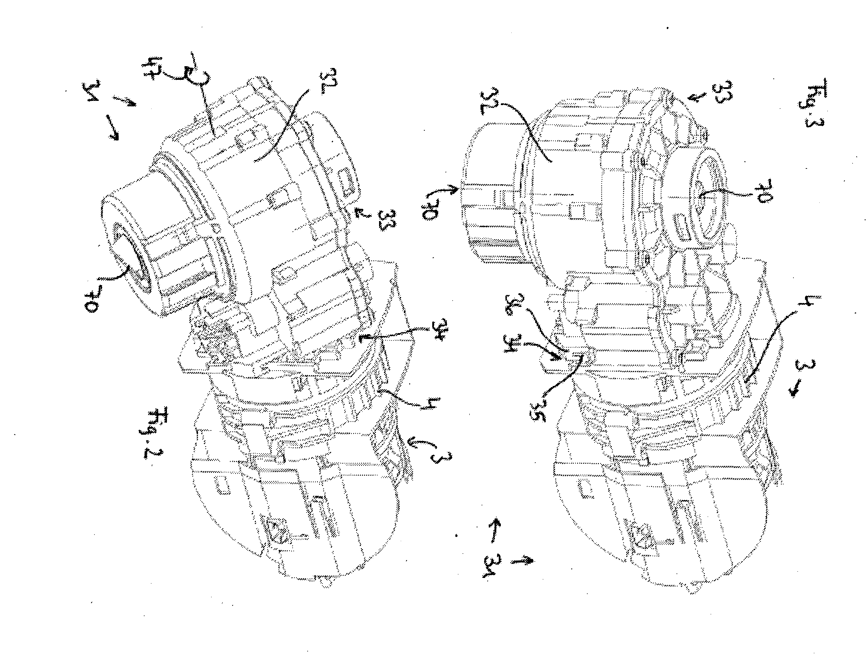

Fig. 1 zeigt ein erfindungsgemäßes Küchengerät 1 in einer perspektivischen Schrägansicht seitlich von oben mit einem Gerätegehäuse 2 und vier verschiedenen Aufnahmen 70 für ein Werkzeug 29, welches als Rührbesen 74 ausgestaltet sein kann. Hierbei sind drei der vier Aufnahmen 70 mit dem Elektromotor 3 (siehe Fig. 2 bis 6) antreibbar.

Fig. 2 zeigt eine Elektromotor-Getriebestufen-Anordnung 31 des erfindungsgemäßen Küchengeräts 1 während einer Vormontage in einer perspektivischen Schrägansicht, wobei eine Getriebestufe 33 mit dem Elektromotor 3 verbunden wird, indem ein Getriebegehäuse 32 und ein Motorgehäuse 4 miteinander mit einem Bajonettverschluss 34 verbunden werden, indem das Getriebegehäuse 32 um einen Winkel verdreht auf das Motorgehäuse 4 aufgesetzt wird und durch Drehung entlang einer Drehrichtung 47 fixiert wird. Mit Hilfe des Bajonettverschlusses 34 ist eine mittels einer Dreh-Streckbewegung bewirkte, einfache aber zuverlässige Verbindung der Getriebestufe 33 mit dem Elektromotor 3 möglich.

Fig. 3 zeigt die Elektromotor-Getriebestufen-Anordnung 31 nach Fig. 2 in perspektivischer Ansicht, wobei die Getriebestufe 33 mit dem Bajonettverschluss 34 an dem Elektromotor 3 befestigt ist, indem ein erstes Bajonettverschlussteil 35 an dem Elektromotor 3 in ein entsprechend komplementär ausgestaltetes zweites Bajonettverschlussteil an der Getriebestufe 33 in Eingriff gelangt.

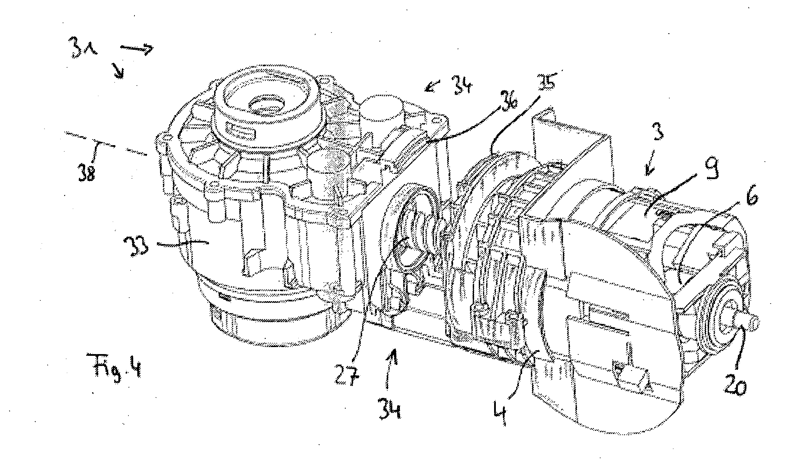

Fig. 4 zeigt eine weitere Elektromotor-Getriebestufen-Anordnung 31 des erfindungsgemäßen Küchengeräts 1 im Zustand unmittelbar vor der Vormontage in einer perspektivischen Schrägansicht, wobei der Elektromotor 3 und die Getriebestufe 33 entlang einer Verbindungslinie 38 zusammengeschoben werden, während eine Getriebeschnecke 27 des Elektromotors 3 in das Innere der Getriebestufe 33 eindringt, wobei durch Drehung der Getriebestufe 33 relativ zum Elektromotor um die Verbindungslinie 38 das erste Bajonettverschlussteil 35 am Elektromotor 3 in das zweite Bajonettverschlussteil 36 an der Getriebestufe 33 eingreift.

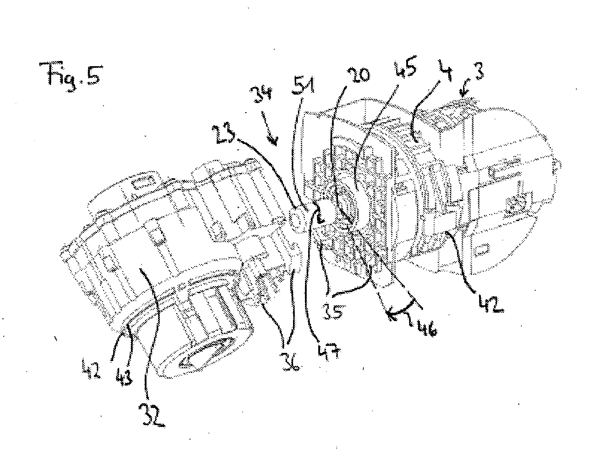

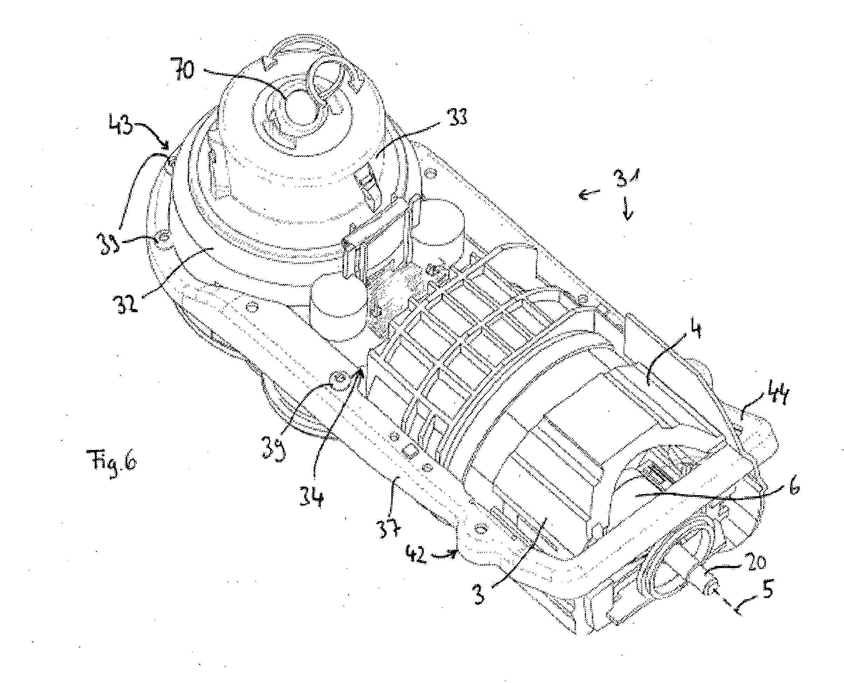

Fig. 5 zeigt eine Elektromotor-Getriebestufen-Anordnung 31 des erfindungsgemäßen Küchengeräts 1 bevor sie zusammengesetzt wird. Zum Verschließen des Bajonettverschlusses 34 wird das Getriebegehäuse 32 relativ zum Motorgehäuse 4 um einen Verschlusswinkel 46 von 30 ° gedreht, damit die am Motorgehäuse 4 befindlichen ersten Bajonettverschlussteile 35 in Eingriff mit den am Getriebegehäuse 32 befindlichen zweiten Bajonettverschlussteilen 36 gelangen. Auf einer Motorwelle 20 sitzt ein als erstes Stirnschraubrad 51 ausgestaltetes Getriebeelement 23, welches sich im Betrieb des Elektromotors 3 entlang der Drehrichtung 47 dreht, so dass die Drehung der Motorwelle 20 den Bajonettverschluss 34 im Betrieb fixiert. Das Getriebegehäuse 32 bzw. das Motorgehäuse 4 weist Verbindungsgegenelemente 42 auf, die als Verbindungsaufnahmen 43 ausgestaltet sind, um einen Verstärkungsrahmen 37 (siehe Fig. 6) mit entsprechenden Verbindungsvorsprüngen 41 aufzunehmen. Mit Hilfe des Verstärkungsrahmens 37 wird das Getriebegehäuse 32 zusätzlich gegenüber dem Motorgehäuse 4 stabilisiert.

Fig. 6 zeigt die Elektromotor-Getriebestufen-Anordnung 31 nach Fig. 5 im vormontierten Zustand in perspektivischer Schrägansicht, wobei der Verstärkungsrahmen 37 die Getriebestufe 33 und den Elektromotor 3 zusätzlich gegen eine Torsion relativ zueinander verstärkt. Der Verstärkungsrahmen 37 wird mit Hilfe von Schrauben 39 an dem Motorgehäuse 4 bzw. dem Getriebegehäuse 32 verschraubt. Hierzu ist der Verstärkungsrahmen 37, der eine L-Form aufweist, mit Hilfe von Verbindungsaufnahmen 43 am Motorgehäuse 4 bzw. am Getriebegehäuse 32 fixiert. Der Verstärkungsrahmen 37 ist als L-Profil ausgestaltet. Die Drehung der Motorachse 20 des Elektromotors 3 um die Motordrehachse 5 wirkt in Schließrichtung des Bajonettverschlusses 34, so dass sich die Getriebestufe 33 auch unter starker Last nicht von dem Elektromotor 3 lösen kann. Die Getriebestufe 33 weist eine Aufnahme 70 auf, die ein Werkzeug 29 wie z.B. einen Rührbesen 74 aufnehmen kann.

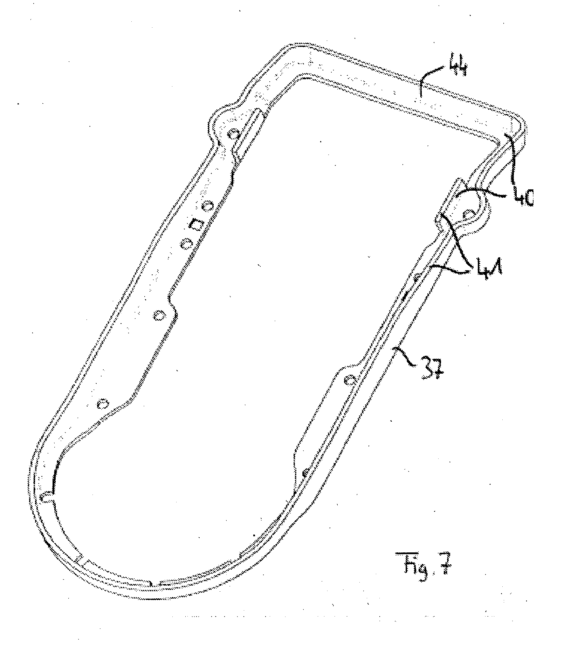

Fig. 7 zeigt den Verstärkungsrahmen 37 nach Fig. 6 in einer perspektivischen Schrägansicht. Der Verstärkungsrahmen 37 ist als L-Profil 44 mit entsprechenden Verbindungselementen 40 sowie Verbindungsvorsprüngen 41 ausgestaltet, damit er an dem Getriebegehäuse 32 bzw. dem Motorgehäuse 4 befestigt werden kann, wozu nur wenige Schrauben 39 erforderlich sind. Mit Hilfe des Verstärkungsrahmens können Drehmomente des Elektromotors 3 von etwa 20 Nm aufgenommen werden. Hierdurch wird eine besonders steife Konstruktion realisiert, die eine Vormontage der Elektromotor-Getriebestufen-Anordnung 31 ermöglicht, so dass ein Testen und Spezifizieren der Elektromotor-Getriebestufen-Anordnung 31 vor einem Einbau in ein Gerätgehäuse 2 des Küchengeräts 1 erfolgen kann.

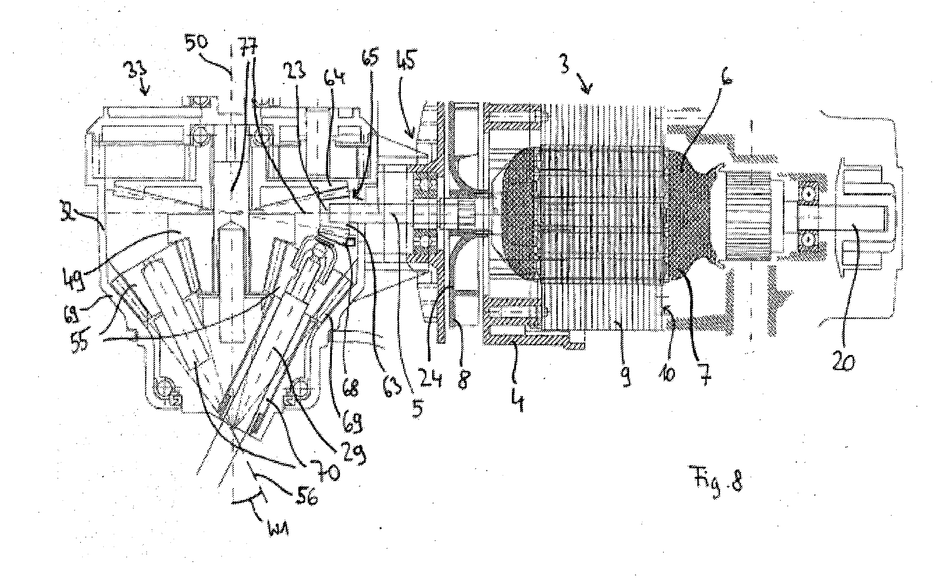

Fig. 8 zeigt einen Längsschnitt durch eine Elektromotor-Getriebestufen-Anordnung 31 mit einer vertikalen Schnittebene. Der Elektromotor 3 umfasst das Motorgehäuse 4, in dem ein Stator 9 mit entsprechenden Statorwicklungen 10 und einem darin beweglichen Rotor 6 mit entsprechenden Rotorwicklungen 7 angeordnet sind. Auf der Motorwelle 20 sitzt ein Kühlrad 24, welches als Lüfterrad 8 ausgestaltet ist. Durch die Dimensionierung des Kühlrads 24, insbesondere die Stärke des verwendeten Materials sowie die thermischen Eigenschaften des verwendeten Materials kann auch an den Rotorwicklungen 7 bzw. in der Getriebestufe 33 entwickelte Wärme durch Wärmeleitung abgeführt werden. An der Motorwelle 20 ist ein Getriebeelement 23 drehfest verbunden, welches als erstes Kegelrad 23 zusammen mit einem zweiten Kegelrad 64 der Getriebestufe 33 ein Kegelradgetriebe 65 bildet. Mit Hilfe des zweiten Kegelrads 64 wird ein Sonnenrad 49 eines Planetengetriebes 54 in Drehung versetzt, welches seinerseits in Eingriff mit drei Planetenrädern 55 steht, die ihrerseits auf einem Hohlrad 49 ablaufen. Durch die Drehung der Motorwelle 20 werden sowohl die Planetenräder 55 um ihre jeweiligen Planetenradachsen 56 als auch um eine Sonnenradachse 50 gedreht, so dass ein in eine Aufnahme 70 des Planetenrads 55 gestecktes Werkzeug 29 eine Drehbewegung auf einem Kegel durchführt. Die Sonnenradachse 50 steht senkrecht zur Motorendrehachse 5. Die Getriebewellen 77 des Kegelradgetriebes 65 stehen im Wesentlichen senkrecht aufeinander. Dabei liegt die Motordrehachse 5 im Wesentlichen koplanar in einer Ebene mit der Sonnenradachse 50. Der durch die Planetenradachse 56 und die Sonnenradachse 50 definierte Winkel W1 beträgt in etwa 30 °.

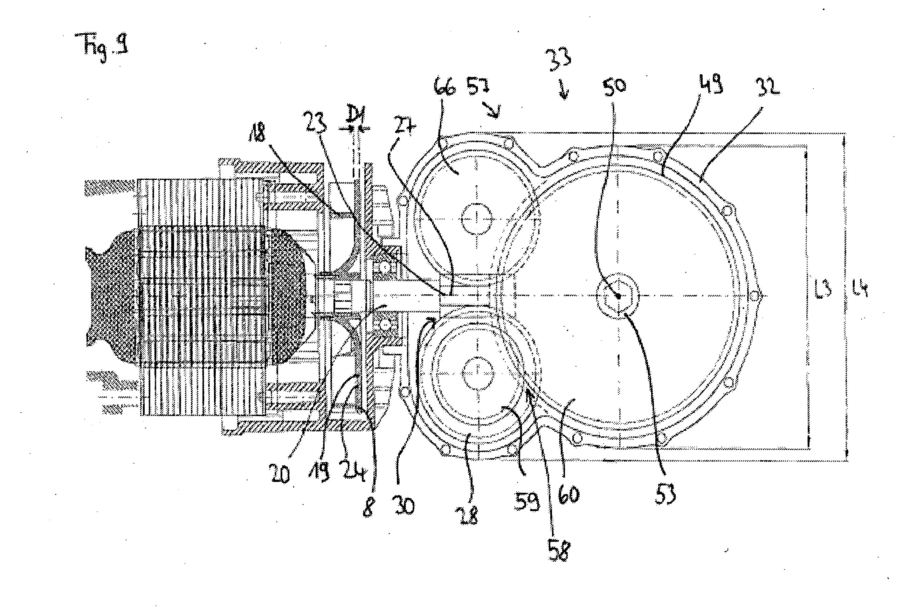

Fig. 9 zeigt eine Elektromotor-Getriebestufen-Anordnung 31 des erfindungsgemäßen Küchengeräts 1 in einem Längsschnitt mit einer waagerechten Schnittebene und zeigt eine Getriebestufe 33, die ein Schneckengetriebe 30 und ein Stirnradgetriebe 58 aufweist. Auf der Motorwelle 9 ist eine Getriebeschnecke 27 drehfest befestigt, welche mit einem Schneckenrad 28 in Eingriff gelangt, das in drehfester Verbindung mit einem ersten Stirnrad 59 steht. Gegenüberliegend zu dem Schneckenrad in Bezug auf die Getriebeschnecke 27 ist ein Gegenrad 66 angeordnet, welches in Eingriff mit der Getriebeschnecke 27 steht und Gegenkräfte aufnimmt. Das erste Stirnrad 59 steht in Eingriff mit einem zweiten Stirnrad 60, welches über eine Sonnenradwelle 53 mit dem Sonnenrad 49 in drehfester Verbindung steht. Während das Schneckengetriebe ein Übersetzungsverhältnis von im Wesentlichen 1:1 aufweist, wird mit dem Stirnradgetriebe 58 eine Untersetzung von 4:1 erzielt. Die Länge L3 beträgt zwischen 80 und 100 mm. Die Länge L4 beträgt zwischen 90 und 120 mm. Mit Hilfe des Kühlrads 6 kann an der Getriebeschnecke 27 erzeugte Wärme durch Wärmeleitung geführt werden, indem die erzeugte Wärme im Inneren der Motorwelle 20 an das Kühlrad 24 abgegeben wird. Das Kühlrad weist einen breiten Sitz und eine große Dicke D1 auf, um Wärmeübergangswiderstände und Wärmeleitungswiderstände möglichst gering zu halten. Hierdurch wird eine zusätzliche Kühlung des Schneckengetriebes 30 überflüssig. Das Kühlrad 24 weist darüber hinaus Ventilatorflügel 18 auf, die die Kühlung unterstützen.

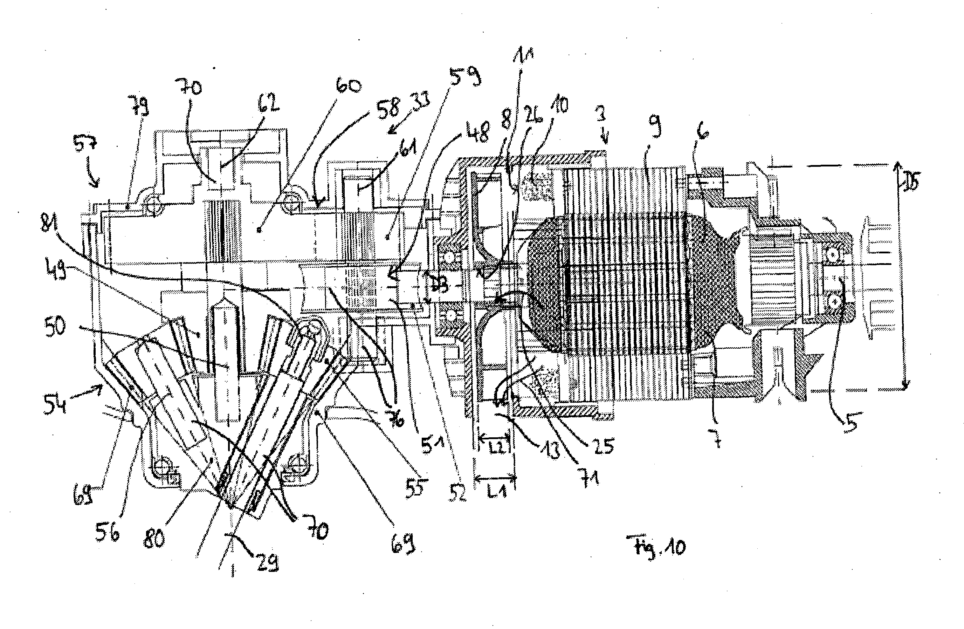

Fig. 10 zeigt eine Elektromotor-Getriebestufen-Anordnung 31 des erfindungsgemäßen Küchengeräts mit einem Stirnradgetriebe 58 und einem Stirnschraubradgetriebe 48 als Getriebestufe 33, wobei das Stirnschraubradgetriebe 48 ein erstes Stirnschraubrad 51, welches auf der Motorwelle 20 befestigt ist, und ein zweites Stirnschraubrad 52 aufweist, welches drehfest mit einem ersten Stirnrad 59 verbunden ist. Das erste Stirnrad 59 steht in Eingriff mit einem zweiten Stirnrad 60, welches auf einer zweiten Stirnradwelle 62 befestigt ist und mit dem Sonnenrad 49 drehfest verbunden ist. Die zweite Stirnradwelle 62 ist im Wesentlichen parallel zu einer ersten Stirnradwelle 61 des ersten Stirnrads 59. Die zweite Stirnradwelle 62 weist eine Aufnahme 70 für ein Werkzeug 29 auf. Um dieses Werkzeug in die Aufnahme 70 einzuführen, muss ein Gehäusedeckel 79 angehoben werden. Das Stirnradgetriebe 58 und das Stirnschraubradgetriebe 48 bilden eine drehungsübertragende Verbindung für das Planetengetriebe 54, welches das Sonnenrad 49, drei Planetenräder 55 und ein Hohlrad 69 aufweist. Das Sonnenrad 49, die Planetenräder 55 und das Hohlrad 69 sind kegelförmig, so dass bei einer Drehung der Motorwelle 20 ein Werkzeug 29, welches in eine Aufnahme 70 der Planetenräder 55 eingesetzt ist, um eine Planetenradachse 56 dreht, die ihrerseits auf einem Kegel um eine Sonnenradachse 50 rotiert. Aufgrund der Kegelform des Sonnenrads 49 der Planetenräder 55 und des Hohlrads 69 führt das Werkzeug 29 eine Taumelbewegung durch, wobei die Taumelbewegung auf einem Kegel mit einem Öffnungswinkel von ungefähr 60 ° verläuft. Das Werkzeug 29 kann in die Aufnahme 70 eines Planetenrads 55 gesteckt und mit Hilfe einer Werkzeugarretierung 81 arretiert werden. Das Stirnschraubradgetriebe 48 weist im Wesentlichen senkrecht zueinander stehende Getriebewellen 76 auf. Der Elektromotor 3 weist einen Rotor 6 auf, der Rotorwicklungen 7 trägt, die von der durch das Lüfterrad 8 erzeugten Kühlluft 71 gekühlt werden. Ein Stator 9 des Elektromotors 3 weist Statorwicklungen 10 auf, die dem Lüfterrad 8 frei, d. h. ohne ein dazwischen befindliches Hindernis, gegenüberliegen. Hierdurch kann die Kühlluft 71 direkt mit einem Wicklungsende 11 der Statorwicklung 10 in Berührung gelangen. Das Motorgehäuse 4 weist Austrittsöffnungen 13 für die Kühlluft 71 auf, welche eine Länge L1 aufweisen, die in etwa der axialen Länge L2 des Lüfterrads 8 entspricht. Die Dicke des Lüfterrads 8 beträgt 30 % des Durchmessers D3 der Motorwelle 20 und bewirkt eine gute Wärmeabfuhr von der Motorwelle 20 weg und hin zu radial außen liegenden Bereichen des Lüfterrades 8. Der Durchmesser D5 des Kühlrads 64 entspricht im Wesentlichen dem Durchmesser der Statorwicklungen 10 in einer Ebene senkrecht zur Motordrehachse 5. Mit Hilfe des Lüfterrads 8 wird insbesondere Kühlluft von innen aus dem Motorgehäuse nach außen gefördert.

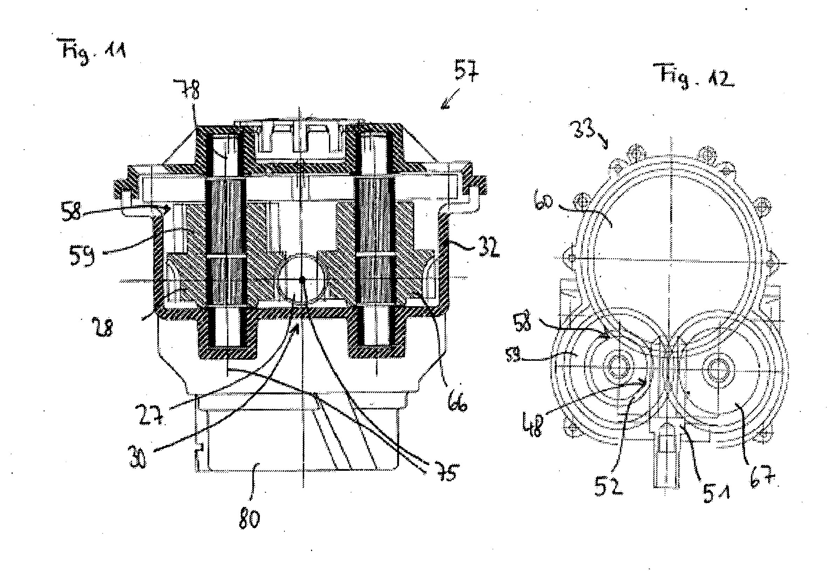

Fig. 11 zeigt eine drehungsübertragende Verbindung 57 mit einem Stirnradgetriebe 58 und einem Schneckengetriebe 30 im Querschnitt entlang einer vertikalen Schnittebene senkrecht zur Motordrehachse 5. Eine Getriebeschnecke 27 greift in ein Schneckenrad 28, welches über eine Getriebewelle 75 mit einem ersten Stirnrad 59 drehfest verbunden ist, welches seinerseits in ein zweites Stirnrad 60 (nicht gezeigt) eingreift. Ein Schneckengegenrad 66 nimmt Gegenkräfte auf, so dass die Getriebeschnecke 27 nicht nach rechts ausbrechen kann. An einem Gerätekopf 80 kann ein Rührbesen 74 (siehe Fig. 1) gesetzt werden.

Fig. 12 zeigt eine weitere Ausführungsform der Getriebestufe 33 mit einem Stirnradgetriebe 58 und einem Stirnschraubradgetriebe 48, wobei ein erstes Stirnschraubrad 28 mit einem zweiten Stirnschraubrad 52 in Eingriff gelangt, welches drehfest verbunden mit einem ersten Stirnrad 59 ist, dass in Eingriff mit einem zweiten Stirnrad 60 steht. In Bezug auf das erste Stirnschraubrad 51 gegenüberliegend zu dem zweiten Stirnschraubrad 52 ist ein Stirnschraubgegenrad 67 angeordnet, um Gegenkräfte aufnehmen zu können.

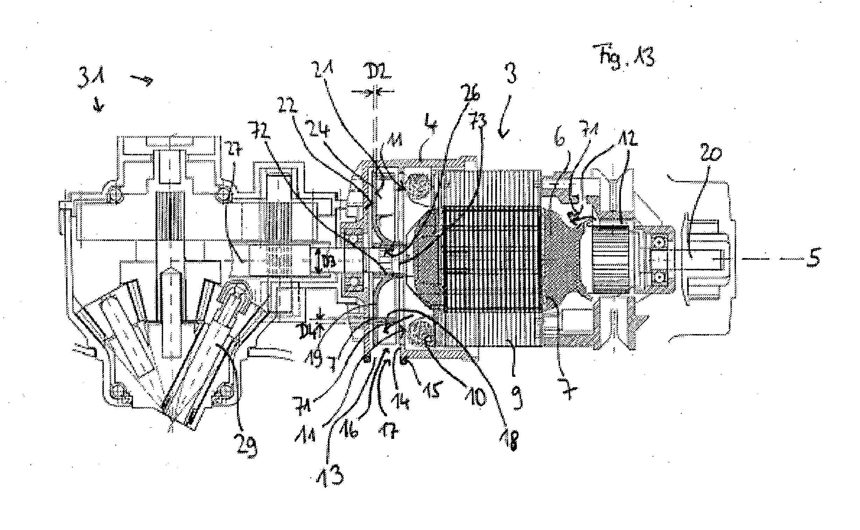

Fig. 13 zeigt eine weitere Ausführungsform der Elektromotor-Getriebestufen-Anordnung 31 im Längsschnitt mit einer vertikalen Schnittebene, wobei auf der Motorwelle 20 ein Kühlrad 24 befestigt ist, welches mit einer gut wärmeleitenden Kontaktfläche 26 mit der Motorwelle 20 verbunden ist, um einen Wärmeübergangswiderstand 72 möglichst klein zu gestalten. Wärme, die an der Getriebeschnecke 27 oder in den Rotorwicklungen 7 des Rotors 6 gebildet wird, wird in der Motorwelle 20, welche einen möglichst geringen Wärmeleitungswiderstand 73 aufweist, über die Kontaktflächen 26 an das Kühlrad 24 geleitet, welches die Wärme aufgrund seiner großen Wandstärke D2 gut aufnehmen und in radial außen liegende Bereiche des Kühlrads 24 effizient befördern kann. Das Kühlrad 24 weist darüber hinaus Ventilatorflügel 18 auf, welche bei der Drehung der Motorwelle 20 einen Kühlluftstrom 71 generieren. Der Kühlluftstrom 71 kühlt einerseits das Kühlrad 24 und hilft somit die über Wärmeleitung transportierte Wärme abzuführen. Weiterhin erzeugt das Kühlrad 24 Kühlluft 71, die direkt an einem Wicklungsende 11 einer Statorwicklung 10 des Stators 9 vorbeistreicht und somit auch den Stator 9 kühlt. Das Motorgehäuse 4 weist Eintrittsöffnungen 12 für Kühlluft 71 wie auch Austrittsöffnungen 13 auf. Die Austrittsöffnungen weisen einen ersten 14 und einen zweiten 15 Rand auf, die jeweils auskragend nach innen bzw. außen gestaltet sind, wodurch ein erster Strömungskanal 16 und ein zweiter Strömungskanal 17 erzeugt wird, welche eine Beschleunigung der Kühlluft 71 unterstützen und somit die Kühlung des Elektromotors 3 positiv beeinflussen. Das Kühlrad 24 ist als Lüfterrad 8 ausgestaltet, indem die Ventilatorflügel 18 auf einer Trägerscheibe 19 aufgebracht sind. Das Lüfterrad 8 ist durch Spritzguss hergestellt. Die Wandstärke D4 der Ventilatorflügel 18 beträgt in etwa 20 % des Durchmessers D3 der Motorwelle 20. Die Kontaktfläche 26 entspricht in etwa der Querschnittsfläche der Motorwelle 20. Durch eine derartige Dimensionierung des Lüfterrads 8 wird eine gute Wärmeabfuhr der in der Getriebeschnecke 27 bzw. in den Rotorwicklungen 7 erzeugten Wärme bewirkt. Die Wärme wird über das Lüfterrad 8 abgeführt, so dass insgesamt eine besonders zügige und effiziente Wärmeabfuhr selbst bei starker Belastung des Küchengeräts 1 erzielt wird.

Im Folgenden werden verschiedene weitere Aspekte, die mit der Erfindung in einem Zusammenhang stehen, beschrieben. Die einzelnen Aspekte können jeweils einzeln angewandt, d.h. unabhängig voneinander, oder beliebig miteinander kombiniert werden:

Ein besonders vorteilhafter Elektromotor 3 für ein elektromotorisches Küchengerät 1, insbesondere für eine elektromotorische Solo- oder Universalküchenmaschine, umfassend ein Motorgehäuse 4, in dem ein entlang einer Motordrehachse 5 drehbeweglicher Rotor 6 mit einem damit drehfest verbundenen Lüfterrad 8 angeordnet ist sowie ein Stator 9 mit einer Statorwicklung 10 , wobei die Statorwicklung 10 ein Wicklungsende 11 aufweist, welches sich parallel zu einer Richtung der Motordrehachse 5 zum Lüfterrad 8 hin erstreckt, ist dadurch gekennzeichnet, dass das Wicklungsende 11 und das Lüfterrad 8 sich frei gegenüberliegen. In einer Ausgestaltung ist der Elektromotor 3 ein Wechselstrommotor. In einer weiteren Ausgestaltung ist der Elektromotor 3 ein Kondensatormotor. In einer noch weiteren Ausgestaltung ist der Elektromotor 3 ein Spaltpolmotor. In einer Ausgestaltung weist das Motorgehäuse 4 Eintrittsöffnungen 12 und Austrittsöffnungen 13 für von dem Lüfterrad 8 geförderte Kühlluft 71 auf, und die Länge L1 der Austrittsöffnungen 13 entlang der Richtung der Motordrehachse 5 entspricht im Wesentlichen der axialen Länge L2 des Lüfterrads 8. In einer weiteren Ausgestaltung weist das Motorgehäuse 4 Austrittsöffnungen 13 für von dem Lüfterrad 8 geförderte Kühlluft 71 auf, die einen nach innen in das Motorgehäuse 4 auskragenden ersten Rand 14 aufweisen, der als erster Strömungskanal 16 zur Beschleunigung der Kühlluft 71 dient. Weiterhin kann das Motorgehäuse 4 Austrittsöffnungen 13 für von dem Lüfterrad 8 geförderte Kühlluft 71 aufweisen, die einen nach außen auskragenden zweiten Rand 15 aufweisen, der als zweiter Strömungskanal 17 zur Beschleunigung der Kühlluft 71 dient. In einer Weiterbildung umfasst das Lüfterrad 8 Ventilatorflügel 18 und weist eine senkrecht zur Motordrehachse 5 angeordnete.Trägerscheibe 19 mit einer ersten 21 und einer zweiten 22 Scheibenfläche auf, wobei die Ventilatorflügel 18 an der Trägerscheibe 19 befestigt sind. In einer weiteren Weiterbildung sind die Ventilatorflügel 18 gemeinsam auf der ersten Scheibenfläche 21 angeordnet, insbesondere gut wärmeleitend angeordnet, die insbesondere zur Statorwicklung 10 hin weist. In einer speziellen Ausführungsform liegt die maximale nominale Drehfrequenz des Elektromotors 3 in einem Bereich von 8000 bis 20000 Umdrehungen pro Minute, insbesondere in einem Bereich von 10000 und 15000 Umdrehungen pro Minute. Die maximale aufnehmbare elektrischen Nennleistung des Elektromotors 3 kann in einem Bereich von 200 W bis 1200 W, insbesondere in einem Bereich von 600 W bis 900 W, liegen.

Ein besonders vorteilhaftes elektromotorisches Küchengerät 1, insbesondere elektromotorische Solo- oder Universalküchenmaschine, umfasst den erfindungsgemäßen Elektromotor 3.

Ein besonders vorteilhaftes elektromotorisches Küchengerät 1, insbesondere elektromotorische Solo- oder Universalküchenmaschine, mit einem Elektromotor 3, der einen Stator 9 und einen darin auf einer Motorwelle 20 drehbeweglichen Rotor 6 aufweist, wobei der Rotor 6 Rotorwicklungen 7 umfasst und die Motorwelle 20 ein Getriebeelement 23, insbesondere eine Getriebeschnecke 27 oder ein erstes Stirnschraubrad 51, aufnimmt, ist dadurch gekennzeichnet, dass ein mit der Motorwelle 20 drehfest verbundenes metallisches Kühlrad 24 zum Kühlen der Rotorwicklungen 7 und/oder zum Kühlen des Getriebeelements 23 vorgesehen ist. Vorteilhafterweise sind das Kühlrad 24 und der Rotor 6 über die Motorwelle 20 derart wärmeleitend verbunden, dass im Betrieb bei nominaler Maximalleistung des Elektromotors 3 mindestens 20 %, insbesondere mindestens 30%, vorzugsweise mindestens 40%, der von den Rotorwicklungen 7 erzeugten Wärme über Wärmeleitung an das Kühlrad 24 abgeleitet wird. Insbesondere sind das Kühlrad 24 und das Getriebeelement 23 derart wärmeleitend verbunden, dass im Betrieb bei nominaler Maximalleistung des Elektromotors 3 mindestens 60 %, insbesondere mindestens 75 %, vorzugsweise mindestens 90%, der an dem Getriebeelement 23 eingeführten Wärmeleistung über Wärmeleitung an das Kühlrad 24 abgeführt wird. In einer Ausgestaltung liegt eine Wandstärke D2 der Kühlrads 24 mindestens 20 %, insbesondere mindestens 25 %, vorzugsweise mindestens 30%, des Durchmessers D3 der Motorwelle 20 beträgt und insbesondere in einem Bereich von 1,5 mm bis 5 mm. In einer Weiterbildung ist die Summe der Wärmeübergangswiderstände 72 entlang der Wärmeleitungsstrecke 25 Rotorwicklung-Rotor-Motorwelle-Kühlrad 24 kleiner als die Summe der Wärmeleitungswiderstände 73 zwischen den Rotorwicklungen 7 und dem Kühlrad 24, insbesondere kleiner als 50%, vorzugsweise kleiner als 30%, besonders bevorzugt kleiner als 10 %. Das Kühlrad 24 und die Motorwelle 20 können an einer Kontaktfläche 26 verbunden sein, die mindestens 40 %, insbesondere mindestens 50%, vorzugsweise mindestens 60%, der Außenumfangfläche eines Hohlzylinders mit einem Durchmesser gleich dem Durchmesser D3 der Motorwelle 20 und einer Länge gleich dem Durchmesser D3 der Motorwelle 20 beträgt. Vorteilhafterweise ist das Kühlrad 24 entlang der Motorwelle 20 zwischen den Rotorwicklungen 7 und dem Getriebeelement 23 angeordnet. Das Getriebeelement 23 kann eine Getriebeschnecke 27 sein. In einer Ausgestaltung kann das Kühlrad 24 als Lüfterrad 8 ausgestaltet sein und kann insbesondere Ventilatorflügel 18 umfassen, deren Wandstärken D4 vorzugsweise mindestens 15 %, besonders bevorzugt mindestens 20%, des Durchmessers D3 der Motorwelle 20 betragen. Vorteilhafterweise weist das Kühlrad 24 eine senkrecht zur Motordrehachse 5 angeordnete Trägerscheibe 19 mit einer ersten 21 und einer zweiten 22 Scheibenfläche auf, wobei die Ventilatorflügel 18 an der Trägerscheibe 19 befestigt sind und insbesondere die Dicke D1 der Trägerscheibe 19 mindestens 20%, vorzugsweise mindestens 30%, des Durchmessers D3 der Motorwelle 20 beträgt. Vorteilhafterweise entspricht der Durchmesser D5 des Kühlrads 24 im Wesentlichen dem des Stators 9. In einer speziellen Ausgestaltung besteht das Kühlrad 24 aus Aluminium oder einer Aluminium-Zink Legierung. Das Kühlrad 24 kann durch Gießen oder Schmieden hergestellt sein. In einer Ausgestaltung kann ein Werkzeug 29, insbesondere ein Pürier-, Misch-, Häcksel-, Knet- und/oder Schneidwerk, ein Schlag- bzw. Rührbesen 74, ein Getränkemixer, ein Durchlaufschnitzler, eine Getreidemühle, eine Zitrus- bzw. Fruchtpresse und/oder ein Fleischwolf, in das Küchengerät 1 einsetzbar sein.

Eine besonders vorteilhafte Anordnung eines Schneckengetriebes 30 umfasst ein Schneckenrad 28, eine Getriebeschnecke 27, eine Motorwelle 20 und ein Kühlrad 24, wobei das Schneckenrad 28 mit der an der Motorwelle 20 drehfest verbundenen Getriebeschnecke 27 in Eingriff gelangt und das Kühlrad 24 an und mit der Motorwelle 20 drehfest verbunden ist, und ist dadurch gekennzeichnet, dass das Kühlrad 24 metallisch ist und dass im Betrieb bei nominaler Maximalleistung mindestens 60 %, insbesondere mindestens 75 %, vorzugsweise mindestens 90%, der an dem Schneckengetriebe 30 erzeugten Wärmeleistung an das Kühlrad 24 über Wärmeleitung abgeführt wird. Das Kühlrad 24 kann ein Lüfterrad 8 sein.

Ein besonders vorteilhaftes elektromotorisches Küchengerät 1, insbesondere elektromotorische Solo- oder Universalküchenmaschine, umfassend eine einsetzbare Elektromotor-Getriebestufen-Anordnung 31, die einen ein Motorgehäuse 4 aufweisenden Elektromotor 3 und eine damit befestigte, ein Getriebegehäuse 32 aufweisende Getriebestufe 33 aufweist, ist dadurch gekennzeichnet, dass die Anordnung 31 einen aufsetzbaren Verstärkungsrahmen 37 aufweist, der um das Motorgehäuse 4 und das Getriebegehäuse 32 herum verläuft.

In einer Ausgestaltung stellt der Verstärkungsrahmen 37 eine im Wesentlichen torsionssteife Verbindung entlang der Verbindungslinie 38 zwischen dem Elektromotor 3 und der Getriebestufe 33 her, wobei die torsionssteife Verbindung insbesondere Drehmomente in einem Bereich von 3 Nm bis 100 Nm, vorzugsweise in einem Bereich von 5 Nm bis 50 Nm, besonders bevorzugt ein einem Bereich von 10 Nm bis 20 Nm, aufnehmen kann. Der Verstärkungsrahmen 37 kann aus einem Metall, insbesondere durch Stanzen und Pressen oder durch Spritzguss, hergestellt sein. Der Verstärkungsrahmen 37 kann mit Hilfe von weniger als zehn Schrauben 39, insbesondere mit weniger als sechs Schrauben, vorzugsweise mit nur einer Schraube, an dem Getriebegehäuse 32 und/oder an dem Motorgehäuse 4 verschraubt sein. Vorteilhafterweise umfasst das Getriebegehäuse 32 und das Motorgehäuse 4 bzw. der Verstärkungsrahmen 37 Verbindungselemente D1, insbesondere Verbindungsvorsprünge 41, vorzugsweise eine umlaufende Feder, und Verbindungsgegenelemente 42, insbesondere Verbindungsaufnahmen 43, vorzugsweise eine umlaufende Nut, mit denen eine gewindefreie Befestigung des Verstärkungsrahmen 37 an dem Getriebegehäuse 32 bzw. an dem Motorgehäuse 4 bewirkt wird. Der Verstärkungsrahmen 37 kann ein U-förmiges oder L-förmiges Profil 44 aufweisen. Vorteilhafterweise kann ein Werkzeug 29, insbesondere ein Pürier-, Misch-, Häcksel-, Knet- und/oder Schneidwerk, ein Schlag- bzw. Rührbesen 74, ein Getränkemixer, ein Durchlaufschnitzler, eine Getreidemühle, eine Zitrus- bzw. Fruchtpresse und/oder ein Fleischwolf, mit dem Küchengerät 1 verbunden werden. Das Motorgehäuse 4 und/oder das Getriebegehäuse 32 kann auch aus Kunststoff, insbesondere aus glasfaserverstärktem Kunststoff, hergestellt sein. Das Getriebegehäuse 32 und das Motorgehäuse 4 kann mit Hilfe eines Schraubflansches 45, insbesondere mit Hilfe eines Bajonettverschlusses 34, miteinander verbunden sein.

Ein besonders vorteilhaftes Verfahren zum Herstellen eines Küchengeräts 1, insbesondere eines erfindungsgemäßen Küchengeräts 1, welches ein Gerätegehäuse, einen ein Motorgehäuse 4 aufweisenden Elektromotor 3 und eine ein Getriebegehäuse 32 aufweisende Getriebestufe 33 aufweist, sieht vor, dass zur Vormontage das Motorgehäuse 4 mit dem Getriebegehäuse 32 unter Ausbildung einer Elektromotor-Getriebestufen-Anordnung 31 derart verbunden wird, dass eine Motorwelle 20 des Elektromotors 3 mit einer Getriebewelle der Getriebestufe 33 drehfest verkoppelt wird, und um das Getriebegehäuse 32 und das Motorgehäuse 4 ein Verstärkungsrahmen 37 herumgelegt wird, so dass das Getriebegehäuse 32 torsionssteif mit dem Motorgehäuse 4 verbunden ist; und dass anschließend die vormontierte Elektromotor-Getriebestufen-Anordnung 31 in das Gerätegehäuse 2 eingebaut wird. Der Verstärkungsrahmen 37 kann mit weniger als zehn Schrauben 39, insbesondere weniger als sechs Schrauben, vorzugsweise mit nur einer Schraube, an dem Motorgehäuse 4 und/oder Getriebegehäuse 32 befestigt sein. Vorteilhafterweise wird der Verstärkungsrahmen 37 mit dem Motorgehäuse 4 und/oder mit dem Getriebegehäuse 32 verklipst. Vorteilhafterweise wird die Elektromotor-Getriebestufen-Anordnung 31 vor dem Einbau in das Gerätegehäuse 2 getestet bzw. spezifiziert.

Ein besonders vorteilhaftes elektromotorisches Küchengerät 1, insbesondere elektromotorische Solo- oder Universalküchenmaschine, mit einem Elektromotor 3 und einer Getriebestufe 33, wobei der Elektromotor 3 ein Motorgehäuse 4 und die Getriebestufe 33 ein Getriebegehäuse 32 aufweist, ist dadurch gekennzeichnet, dass das Motorgehäuse 4 und das Getriebegehäuse 32 mit Hilfe eines Bajonettverschlusses 34 miteinander verbunden sind. Das Motorgehäuse 4 kann aus glasfaserverstärktem Kunststoff oder Spritzguss sein. Das Getriebegehäuse 32 kann auch aus glasfaserverstärktem Kunststoff oder Spritzguss sein. Der Bajonettverschluss 34 weist insbesondere einen Verschlusswinkel 46 von weniger als 180 °, insbesondere von weniger als 90°, vorzugsweise von weniger als 45 °, auf. In einer Ausgestaltung weist der Elektromotor 3 eine einzige Drehrichtung 47 auf, die in Schließrichtung des Bajonettverschlusses 34 wirkt und ein Selbstfestziehen des Bajonettverschlusses 34 im Betrieb bewirkt. Vorteilhafterweise wird eine drehfeste Verbindung einer Motorwelle 20 des Elektromotors 3 mit einer Getriebewelle 75 der Getriebestufe 33 mit Hilfe eines Schneckengetriebes 30 hergestellt. Das Schneckengetriebe 30 kann eine motorseitige Getriebeschnecke 27 und mindestens ein getriebeseitiges Schneckenrad 28, vorzugsweise zwei zur Getriebeschnecke 27 gegenüberliegende, getriebeseitige Schneckenräder, umfassen. Vorteilhafterweise werden das Motorgehäuse 4 und das Getriebegehäuse 32 zusätzlich durch einen Verstärkungsrahmen 37 miteinander fixiert. In einer Ausgestaltung weist der Bajonettverschluss 34 eine Verschlussdrehachse auf, die im Wesentlichen mit einer Motordrehachse 5 zusammenfällt. Vorteilhafterweise weist das Küchengerät 1 ein Gerätegehäuse 2 auf, in welches der mit der Getriebestufe 33 verbundene Elektromotor 3 einsetzbar ist.

Ein besonders vorteilhafter Elektromotor weist ein erstes Bajonettverschlussteil 35 für das erfindungsgemäße Küchengerät 1 auf.

Eine besonders vorteilhafte Getriebestufe 33 weist ein zweites Bajonettverschlussteil 36 für ein Küchengerät 1 auf.

Ein besonders vorteilhaftes Verfahren zum Montieren eines elektromotorischen Küchengeräts 1, insbesondere des erfindungsgemäßen Küchengeräts 1, mit einem Elektromotor 3 und einer Getriebestufe 33, wobei der Elektromotor 3 ein Motorgehäuse 4 und die Getriebestufe 33 ein Getriebegehäuse 32 aufweist, ist gekennzeichnet durch folgende Verfahrensschritte: Vormontieren des Elektromotors 3 in dem Motorgehäuse 4, Vormontieren der Getriebestufe 33 in dem Getriebegehäuse 32, Verbinden des Motorgehäuses 4 und des Getriebegehäuses 32 mit Hilfe eines Bajonettverschlusses 34, derart, dass eine Motorwelle 20 des Elektromotors 3 mit einer Getriebewelle 75 drehfest verbunden werden. Vorteilhafterweise erfolgt die Dreh-Streckbewegung des Verschließens des Bajonettverschlusses 34 im Wesentlichen um die Motorwelle 20 herum.

Ein besonders vorteilhaftes elektromotorisches Küchengerät 1, insbesondere elektromotorische Solo- oder Universalküchenmaschine, umfassend ein Planetengetriebe 54, welches mindestens ein Planetenrad 55 mit einer Planetenradachse 56 und ein Sonnenrad 49 mit einer Sonnenradachse 50, und einen Elektromotor 3 mit einer Motorwelle 20, die sich entlang einer Motordrehachse 5 erstreckt, aufweist, wobei die Motorwelle 20 und das Planetengetriebe 54 mit einer drehungsübertragenden Verbindung 57 miteinander gekoppelt sind, ist dadurch gekennzeichnet, dass die drehungsübertragende Verbindung 57 ein Stirnradgetriebe 58 mit einem ersten 59 und ein zweiten 60 Stirnrad und/oder ein Kegelradgetriebe 65 mit einem ersten 63 und einem zweiten 64 Kegelrad umfasst. In einer Ausgestaltung weist das Stirnradgetriebe 58 bzw. das Kegelradgetriebe 65 ein Übersetzungsverhältnis in einem Bereich von 10 bis 40, insbesondere in einem Bereich von 20 bis 30, auf. In einer Weiterbildung umfasst die drehungsübertragende Verbindung 57 ein Schneckengetriebe 30 mit einer Getriebeschnecke 27 und einem Schneckenrad 28 oder ein Stirnschraubradgetriebe 48 mit einem ersten 51 und einem zweiten 52 Stirnschraubrad, wobei das Schneckengetriebe 30 bzw. das Stirnschraubradgetriebe 48 ein Übersetzungsverhältnis in einem Bereich von 0,5 bis 4, insbesondere in einem Bereich von 1 bis 2, aufweist. Die Getriebeschnecke 27 bzw. das erste Stirnschraubrad 51 kann auf der Motorwelle 20 sitzen. Das Sonnenrad 49 kann eine Sonnenradwelle 53 aufweisen, auf der ein zweites Kegelrad sitzt. In einer Ausgestaltung stehen die jeweiligen Getriebewellen 75 des Schneckengetriebes 30, die jeweiligen Getriebewellen 76 des Stirnschraubradgetriebes 48 bzw. die jeweiligen Getriebewellen 77 des Kegelradgetriebes 65 im Wesentlichen senkrecht aufeinander bzw. die jeweiligen Getriebewellen 78 des Stirnradgetriebes 58 im Wesentlichen parallel zueinander. Die Sonnenradachse 50 kann im Wesentlichen senkrecht auf der Motordrehachse 5 stehen und mit dieser koplanar sein. In einer Weiterbildung weist zur Aufnahme von Gegenkräften das Schneckengetriebe 30 ein Schneckengegenrad 66, das Stirnschraubradgetriebe 48 ein Stirnschraubgegenrad 67, bzw. das Kegelradgetriebe 65 ein Kegelgegenrad 68 auf, welches in Bezug auf die Getriebeschnecke 27, das erste Stirnschraubrad 51, bzw. das erste Kegelrad 63 jeweils dem Schneckenrad 28, dem zweiten Stirnschraubrad 52 bzw. dem zweiten Kegelrad 64 gegenüberliegt und mit der Getriebeschnecke 27, dem ersten Stirnschraubrad 51 bzw. dem ersten Kegelrad 63 in Eingriff gelangt. Das Planetengetriebe 54 kann ein zu dem Sonnenrad 49 koaxial angeordnetes Hohlrad 69 aufweisen. Das Hohlrad 69 kann stationär sein und mit einem Gerätegehäuse 2 des Küchengeräts 1 drehfest verbunden sein. Das Hohlrad 69 kann kegelförmig sein. Die Planetenräder 55 können kegelförmig sein. In einer Ausgestaltung schneiden sich die Planetenradachse 56 und die Sonnenradachse 50 unter einem Winkel in einem Bereich von 30° bis 80°, insbesondere in einem Bereich von 20° bis 35°, vorzugsweise in einem Bereich von 25° bis 30°, schneiden. Vorteilhafterweise sind mindestens zwei, insbesondere mindestens drei, Planetenräder 55 vorgesehen. Vorteilhafterweise weist das Planetenrad 55 eine Planetenradachse 56 auf und das Übersetzungsverhältnis zwischen einer Drehung um die Sonnenradachse 50 und einer Drehung um die Planetenradachse 56 liegt in einem Bereich von 1:1 bis 1:10, insbesondere in einem Bereich von 1:2 bis 1:5. Der Elektromotor 3 kann eine maximale nominelle Umlauffrequenz in einem Bereich von 8000 Umdrehungen pro Minute bis 20000 Umdrehungen pro Minute, insbesondere in einem Bereich von 10000 Umdrehungen pro Minute bis 15000 Umdrehungen pro Minute, aufweisen. In einer besonderen Ausgestaltung weist das mindestens eine Planetenrad 55 eine Aufnahme 70 für ein Werkzeug 29, insbesondere ein Pürier-, Misch-, Häcksel-, Knet- und/oder Schneidwerk und/oder einen Schlag- bzw. Rührbesen 74, auf.

Die Erfindung betrifft ein elektromotorisches Küchengerät 1, insbesondere eine elektromotorisches Solo- oder Universalküchenmaschine, umfassend eine einsetzbare Elektromotor-Getriebestufen-Anordnung 31, die einen ein Motorgehäuse 4 aufweisenden Elektromotor 3 und eine damit befestigte, ein Getriebegehäuse 32 aufweisende Getriebestufe 33 aufweist, und sieht vor, dass die Anordnung 31 einen aufsetzbaren Verstärkungsrahmen 37 aufweist, der um das Motorgehäuse 4 und das Getriebegehäuse 32 herum verläuft. Weiterhin betrifft die Erfindung ein Verfahren zur Herstellung eines elektromotorischen Küchengeräts 1 unter Verwendung eines Verstärkungsrahmens 27. Die Erfindung zeichnet sich dadurch aus, dass die Elektromotor-Getriebestufen-Anordnung 31 außerhalb eines Gerätegehäuses des Küchengeräts 1 getestet werden kann, preisgünstig hergestellt werden kann und dennoch aufgrund des aufsetzbaren Verstärkungsrahmens 37 besonders torsionssteif und damit zuverlässig im Betrieb ist.

### Bezugszeichenliste

- 1: Küchengerät
- 2: Gerätegehäuse
- 3: Elektromotor
- 4: Motorgehäuse
- 5: Motordrehachse
- 6: Rotor
- 7: Rotorwicklungen
- 8: Lüfterrad
- 9: Stator
- 10: Statorwicklung
- 11: Wicklungsende
- 12: Eintrittsöffnungen
- 13: Austrittsöffnungen
- 14: erster Rand
- 15: zweiter Rand
- 16: erster Strömungskanal
- 17: zweiter Strömungskanal
- 18: Ventilatorflügel
- 19: Trägerscheibe
- 20: Motorwelle
- 21: erste Scheibenfläche
- 22: zweite Scheibenfläche
- 23: Getriebeelement
- 24: Kühlrad
- 25: Wärmeleitungsstrecke
- 26: Kontaktfläche
- 27: Getriebeschnecke
- 28: Schneckenrad
- 29: Werkzeug
- 30: Schneckengetriebe
- 31: Elektromotor-Getriebestufen-Anordnung
- 32: Getriebegehäuse
- 33: Getriebestufe
- 34: Bajonettverschluss
- 35: erstes Bajonettverschlussteil
- 36: zweites Bajonettverschlussteil
- 37: Verstärkungsrahmen
- 38: Verbindungslinie
- 39: Schrauben
- 40: Verbindungselemente
- 41: Verbindungsvorsprünge
- 42: Verbindungsgegenelemente
- 43: Verbindungsaufnahmen
- 44: Profil
- 45: Schraubflansch
- 46: Verschlusswinkel
- 47: Drehrichtung
- 48: Stirnschraubradgetriebe
- 49: Sonnenrad
- 50: Sonnenradachse
- 51: erstes Stirnschraubrad
- 52: zweites Stirnschraubrad
- 53: Sonnenradwelle
- 54: Planetengetriebe
- 55: Planetenrad
- 56: Planetenradachse
- 57: drehungsübertragende Verbindung
- 58: Stirnradgetriebe
- 59: erstes Stirnrad
- 60: zweites Stirnrad
- 61: erste Stirnradwelle
- 62: zweite Stirnradwelle
- 63: erstes Kegelrad
- 64: zweites Kegelrad
- 65: Kegelradgetriebe
- 66: Schneckengegenrad
- 67: Stirnschraubgegenrad
- 68: Kegelgegenrad
- 69: Hohlrad
- 70: Aufnahme
- 71: Kühlluft
- 72: Wärmeübergangswiderstand
- 73: Wärmeleitungswiderstände
- 74: Rührbesen
- 75: Getriebewellen des Schneckengetriebes 30
- 76: Getriebewellen des Stirnschraubradgetriebes 48
- 77: Getriebewellen des Kegelradgetriebes 65
- 78: Getriebewellen des Stirnradgetriebes 58
- 79: Gehäusedeckel
- 80: Gerätekopf
- 81: Werkzeugarretierung

- L1: Länge der Austrittsöffnungen 13
- L2: Länge des Lüfterrads 8
- L3, L4: Längen
- D1: Dicke der Trägerscheibe 19
- D2: Wandstärke des Kühlrads 24
- D3: Durchmesser der Motorwelle 20
- D4: Wandstärke der Ventilatorflügel 18
- D5: Durchmesser des Kühlrads 24
- W1: Winkel

## Patentansprüche

1. Elektromotorisches Küchengerät (1), insbesondere elektromotorische Solo- oder Universalküchenmaschine, umfassend eine einsetzbare Elektromotor-Getriebestufen-Anordnung (31), die einen ein Motorgehäuse (4) aufweisenden Elektromotor (3) und eine damit befestigte, ein Getriebegehäuse (32) aufweisende Getriebestufe (33) aufweist, **dadurch gekennzeichnet, dass** die Anordnung (31) einen aufsetzbaren Verstärkungsrahmen (37) aufweiset, der um das Motorgehäuse (4) und das Getriebegehäuse (32) herum verläuft.

2. Küchengerät (1) nach Anspruch 1, **dadurch gekennzeichnet, dass** der Verstärkungsrahmen (37) eine im Wesentlichen torsionssteife Verbindung entlang der Verbindungslinie (38) zwischen dem Elektromotor (3) und der Getriebestufe (33) herstellt, wobei die torsionssteife Verbindung insbesondere Drehmomente in einem Bereich von 3 Nm bis 100 Nm, vorzugsweise in einem Bereich von 5 Nm bis 50 Nm, besonders bevorzugt ein einem Bereich von 10 Nm bis 20 Nm, aufnehmen kann.

3. Küchengerät (1) nach Anspruch 1 oder 2, **dadurch gekennzeichnet, dass** der Verstärkungsrahmen (37) aus einem Metall, insbesondere durch Stanzen und Pressen oder durch Spritzguss, hergestellt ist.

4. Küchengerät (1) nach einem der vorherigen Ansprüche, **dadurch gekennzeichnet, dass** der Verstärkungsrahmen (37) mit Hilfe von weniger als zehn Schrauben (39), insbesondere mit weniger als sechs Schrauben, vorzugsweise mit nur einer Schraube, an dem Getriebegehäuse (32) und/oder an dem Motorgehäuse (4) verschraubt ist.

5. Küchengerät (1) nach einem der vorherigen Ansprüche, **dadurch gekennzeichnet, dass** das Getriebegehäuse (32) und das Motorgehäuse (4) bzw. der Verstärkungsrahmen (37) Verbindungselemente (D1), insbesondere Verbindungsvorsprünge (41), vorzugsweise eine umlaufende Feder, und Verbindungsgegenelemente (42), insbesondere Verbindungsaufnahmen (43), vorzugsweise eine umlaufende Nut, aufweisen, mit denen eine gewindefreie Befestigung des Verstärkungsrahmen (37) an dem Getriebegehäuse (32) bzw. an dem Motorgehäuse (4) bewirkt wird.

6. Küchengerät (1) nach einem der vorherigen Ansprüche, dass der Verstärkungsrahmen (37) ein U-förmiges oder L-förmiges Profil (44) aufweist.

7. Küchengerät (1) nach einem der vorherigen Ansprüche, dass ein Werkzeug (29), insbesondere ein Pürier-, Misch-, Häcksel-, Knet- und/oder Schneidwerk, ein Schlag- bzw. Rührbesen (74), ein Getränkemixer, ein Durchlaufschnitzler, eine Getreidemühle, eine Zitrus- bzw. Fruchtpresse und/oder ein Fleischwolf, mit dem Küchengerät (1) verbunden werden kann.

8. Küchengerät (1) nach einem der vorherigen Ansprüche, **dadurch gekennzeichnet, dass** das Motorgehäuse (4) und/oder das Getriebegehäuse (32) aus Kunststoff, insbesondere aus glasfaserverstärktem Kunststoff, hergestellt ist.

9. Küchengerät (1) nach einem der vorherigen Ansprüche, **dadurch gekennzeichnet, dass** das Getriebegehäuse (32) und das Motorgehäuse (4) mit Hilfe eines Schraubflansches (45), insbesondere mit Hilfe eines Bajonettverschlusses (34), miteinander verbunden sind.

10. Verfahren zum Herstellen eines Küchengeräts (1), insbesondere eines Küchengeräts (1) nach einem der Ansprüche 1 bis 9, welches ein Gerätegehäuse, einen ein Motorgehäuse (4) aufweisenden Elektromotor (3) und eine ein Getriebegehäuse (32) aufweisende Getriebestufe (33) aufweist, wobei zur Vormontage das Motorgehäuse (4) mit dem Getriebegehäuse (32) unter Ausbildung einer Elektromotor-Getriebestufen-Anordnung (31) derart verbunden wird, dass eine Motorwelle (20) des Elektromotors (3) mit einer Getriebewelle der Getriebestufe (33) drehfest verkoppelt wird, und um das Getriebegehäuse (32) und das Motorgehäuse (4) ein Verstärkungsrahmen (37) herumgelegt wird, so dass das Getriebegehäuse (32) torsionssteif mit dem Motorgehäuse (4) verbunden ist; und wobei anschließend die vormontierte Elektromotor-Getriebestufen-Anordnung (31) in das Gerätegehäuse (2) eingebaut wird.

11. Verfahren nach Anspruch 10, **dadurch gekennzeichnet, dass** der Verstärkungsrahmen (37) mit weniger als zehn Schrauben (39), insbesondere weniger als sechs Schrauben, vorzugsweise mit nur einer Schraube, an dem Motorgehäuse (4) und/oder Getriebegehäuse (32) befestigt wird.

12. Verfahren nach Anspruch 10 oder 11, **dadurch gekennzeichnet, dass** der Verstärkungsrahmen (37) mit dem Motorgehäuse (4) und/oder mit dem Getriebegehäuse (32) verklipst wird.

13. Verfahren nach einem der Ansprüche 10 bis 12, **dadurch gekennzeichnet, dass** die Elektromotor-Getriebestufen-Anordnung (31) vor dem Einbau in das Gerätegehäuse (2) getestet bzw. spezifiziert wird.

## Claims

1. Electric-motor-driven kitchen appliance (1), particularly electric-motor-driven solo or universal food processor, comprising an insertable electric motor / transmission stage arrangement (31), which comprises an electric motor (3) having a motor casing (4) and a transmission stage (33) fastened to the electric motor and having a transmission casing (32), **characterised in that** the arrangement (31) comprises a fittable stiffening frame (37) extending around the motor casing (4) and the transmission casing (32).

2. Kitchen appliance (1) according to claim 1, **characterised in that** the stiffening frame (37) produces a substantially torsionally stiff connection with an electric motor (3) and the transmission stage (33) along the connecting line (38), wherein the torsionally stiff connection can accept, in particular, torques in a range of 3 Nm to 100 Nm, preferably in a range of 5 Nm to 50 Nm, particularly preferably in a range of 10 Nm to 20 Nm.

3. Kitchen appliance (1) according to claim 1 to 2, **characterised in that** the stiffening frame (37) is made of a metal, particularly by punching and pressing or by injection moulding.

4. Kitchen appliance (1) according to any one of the preceding claims, **characterised in that** the stiffening frame (7) is screw-connected with the transmission casing (32) and/or with the motor casing (4) with the help of less than ten screws (39), particularly with less than six screws, preferably with only one screw.

5. Kitchen appliance (1) according to any one of the preceding claims, **characterised in that** the transmission casing (32) and the motor casing (4) or the stiffening frame (37) comprise connecting elements (D1), particularly connecting projections (41), preferably an encircling key, and connecting counter-elements (42), particularly connecting receptacles (43), preferably an encircling groove, by which a thread-free fastening of the stiffening frame (37) to the transmission casing (32) or to the motor casing (4) is produced.

6. Kitchen appliance (1) according to any one of the preceding claims, **characterised in that** the stiffening frame (37) has a U-shaped or an L-shaped profile (44).

7. Kitchen appliance (1) according to any one of the preceding claims, **characterised in that** a tool (29), particularly a puréeing, mixing, chopping, kneading and/or cutting mechanism, a beating or stirring whisk (74), a drinks mixer, a through shredder, a flour mill, a citrus or fruit press and/or a mincer, can be connected with the kitchen appliance (1).

8. Kitchen appliance (1) according to any one of the preceding claims, **characterised in that** the motor casing (4) and/or the transmission casing (32) is made of plastics material, particularly of glassfibre-reinforced plastics material.

9. Kitchen appliance (1) according to any one of the preceding claims, **characterised in that** the transmission casing (32) and the motor casing (4) are connected together with the help of a screw flange (45), particularly with the help of a bayonet coupling (34).

10. Method of manufacturing a kitchen appliance (1), particularly a kitchen appliance (1) according to any one of claims 1 to 9, which comprises an appliance housing, an electric motor (3) having a motor casing (4) and a transmission stage (33) having a transmission casing (32), wherein for the preassembly the motor casing (4) is so connected with the transmission casing (32) with formation of an electric motor / transmission stage arrangement (31) that a motor shaft (20) of the electric motor (3) is coupled with a transmission shaft of the transmission stage (33) to be secure against relative rotation and a stiffening frame (37) is placed around the transmission casing (32) and the motor casing (4) so that the transmission casing (32) is connected with the motor casing (4) in torsionally stiff manner and wherein the preassembled electric motor / transmission stage arrangement (31) is subsequently installed in the appliance housing (2).

11. Method according to claim 10, **characterised in that** the stiffening frame (37) is fastened to the motor casing (4) and/or transmission casing (32) by less than ten screws (39), particularly less than six screws, preferably by only one screw.

12. Method according to claim 10 or 11, **characterised in that** the stiffening frame (37) is clipped to the motor casing (4) and/or to the transmission casing (32).

13. Method according to any one of claims 10 to 12, **characterised in that** the electric-motor / transmission stage arrangement (31) is tested or specified prior to installation in the appliance housing (2).

## Revendications

1. Appareil de cuisine (1) à moteur électrique, notamment robot ménager solo ou universel à moteur électrique, comprenant un ensemble moteur électrique-étage de transmission incorporable (31) qui présente un moteur électrique (3) présentant un carter de moteur (4), et un étage de transmission (33) présentant un carter de transmission (32) fixé au moteur électrique, **caractérisé en ce que** l'ensemble (31) présente un cadre de renforcement (37) montable, qui s'étend autour du carter de moteur (4) et du carter de transmission (32).

2. Appareil de cuisine (1) selon la revendication 1, **caractérisé en ce que** le cadre de renforcement (37) établit une liaison essentiellement résistante à la torsion le long de la ligne de liaison (38) entre le moteur électrique (3) et l'étage de transmission (33), la liaison résistante à la torsion pouvant recevoir notamment des couples dans une plage de 3 Nm à 100 Nm, de préférence dans une plage de 5 Nm à 50 Nm, notamment de préférence dans une plage de 10 Nm à 20 Nm.

3. Appareil de cuisine (1) selon la revendication 1 ou 2, **caractérisé en ce que** le cadre de renforcement (37) est fabriqué dans un métal, notamment par estampage et pressage ou par moulage par injection.

4. Appareil de cuisine (1) selon l'une quelconque des revendications précédentes, **caractérisé en ce que** le cadre de renforcement (37) est vissé sur le carter de transmission (32) et/ou sur le carter de moteur (4) avec moins de dix vis (39), notamment avec moins de six vis, de préférence avec seulement une vis.

5. Appareil de cuisine (1) selon l'une quelconque des revendications précédentes, **caractérisé en ce que** le carter de transmission (32) et le carter de moteur (4) resp. le cadre de renforcement (37) présentent des éléments de raccordement (D1), notamment des saillies de raccordement (41), de préférence une languette périférique, et des contre-éléments de raccordement (42), notamment des logements de raccordement (43), de préférence une rainure, au moyen desquels une fixation exempte de filet du cadre de renforcement (37) est produite sur le carter de transmission (32) resp. sur le carter de moteur (4).

6. Appareil de cuisine (1) selon l'une quelconque des revendications précédentes, **caractérisé en ce que** le cadre de renforcement (37) présente un profil en forme de U ou un profil en forme de L (44).

7. Appareil de cuisine (1) selon l'une quelconque des revendications précédentes, **caractérisé en ce qu'**un outil (29), notamment un outil presse-purée, de mélange, de pétrissage et/ou de coupe, un fouet batteur resp. un fouet mélangeur (74), un mixeur de boisson, un éminceur, un moulin à céréales, un presse-citron resp. presse-fruits et/ou un hachoir à viande, peut être raccordé à l'appareil de cuisine (1).

8. Appareil de cuisine (1) selon l'une quelconque des revendications précédentes, **caractérisé en ce que** le carter de moteur (4) et/ou le carter de transmission (32) sont fabriqués en matière plastique, notamment en matière plastique renforcée à la fibre de verre.

9. Appareil de cuisine (1) selon l'une quelconque des revendications précédentes, **caractérisé en ce que** le carter de transmission (32) et le carter du moteur (4) sont raccordés entre eux à l'aide d'une bride à visser (45), notamment à l'aide d'une fermeture à baïonnette (34).

10. Procédé de fabrication d'un appareil de cuisine (1), notamment d'un appareil de cuisine (1) selon l'une quelconque des revendications 1 à 9, lequel présente un carter d'appareil, un moteur électrique (3) présentant un carter de moteur (4), et un étage de transmission (33) présentant un carter de transmission (32), dans lequel, pour le pré-assemblage le carter de moteur (4), étant raccordé au carter de transmission (32) en formant un ensemble moteur électrique-étage de transmission, de telle manière qu'un arbre de moteur (20) du moteur électrique (3) est accouplé de manière solidaire en rotation à un arbre de transmission de l'étage de transmission (33), et un cadre de renforcement (37) étant posé autour du carter de transmission (32) et du carter de moteur (4) de sorte que le carter de transmission (32) est raccordé au carter de moteur (4) de manière résistante à la torsion ; et l'ensemble moteur électrique-étage de transmission (31) prémonté étant ensuite installé dans le carter d'appareil (2).

11. Procédé selon la revendication 10, **caractérisé en ce que** le cadre de renforcement (37) est fixé sur le carter de moteur (4) et/ou sur le carter de transmission (32) avec moins de dix vis (39), notamment avec moins de six vis, de préférence avec seulement une vis.

12. Procédé selon la revendication 10 ou 11, **caractérisé en ce que** le cadre de renforcement (37) est encliqueré avec le carter de moteur (4) et/ou le carter de transmission (32).

13. Procédé selon l'une quelconque des revendications 10 à 12, **caractérisé en ce que** l'ensemble moteur électrique-étage de transmission (31) est testé resp. spécifié avant l'installation dans le carter d'appareil (2).
